# EUROPÄISCHE PATENTANMELDUNG

(11) **EP 1 732 189 A2**
(43) Veröffentlichungstag der Anmeldung: **13.12.2006**
(21) Anmeldenummer: 06011229.9
(22) Anmeldetag: 31.05.2006
(51) Int. Cl.: H02G 3/32

(54) **Befestigungsvorrichtung für eine Leitung**

(30) Priorität: 01.06.2005 DE 202005008570 U
(71) Anmelder: TRW Automotive Electronics & Components GmbH & Co. KG, 67677 Enkenbach/Alsenborn (DE)
(72) Erfinder: Jatzke Stefan, 67280 Ebertsheim (DE)
(74) Vertreter: Strass, Jürgen

(57) **Zusammenfassung**

Eine Befestigungsvorrichtung (10) für eine Leitung umfaßt ein Verstärkungsteil (12) und eine Kunststoffschicht (14), die das Verstärkungsteil (12) wenigstens teilweise umgibt. Das Verstärkungsteil (12) weist einen Befestigungsabschnitt (12) für einen Bolzen auf. In der Kunststoffschicht (14) ist eine zylindrische Öffnung (24) zur Aufnahme des Bolzens gebildet.

## Beschreibung

Die Erfindung betrifft eine Befestigungsvorrichtung für eine Leitung nach dem Oberbegriff des Anspruchs 1.

Zur Befestigung von Leitungen wie Hydraulikleitungen und elektrischen Leitungen in Fahrzeugen, insbesondere an einer Fahrzeugkarosserie, sind unterschiedliche Befestigungsvorrichtungen bekannt, an die verschiedene Anforderungen gestellt werden. Zum einen sollen sie selbst in höheren Temperaturbereichen eine ausreichende Haltekraft für Leitungen bereitstellen. Zum anderen sollen sie jedoch auch kostengünstig hergestellt werden können und keine scharfen Kanten aufweisen, um ein Verletzungsrisiko für einen Monteur zu minimieren.

Eine Befestigungsvorrichtung der eingangs genannten Art mit einem biegeelastischen Halteblock ist aus der DE-U-89 00 984 bekannt. In den Halteblock ist ein Stabilisierungskörper eingelegt, der in einem vorgegebenen Bereich vollständig freigelegt ist, so daß der Halteblock in zwei separate Blockhälften unterteilt ist.

Die Aufgabe der Erfindung besteht darin, eine Befestigungsvorrichtung für eine Leitung bereitzustellen, die kostengünstig ist und gleichzeitig obige Anforderungen erfüllt.

Zu diesem Zweck sieht die Erfindung eine Befestigungsvorrichtung der eingangs genannten Art mit den kennzeichnenden Merkmalen des Anspruchs 1 vor. Das Verstärkungsteil aus Metall, Blech oder einem härteren Kunststoff ist zumindest teilweise in der Kunststoffschicht eingebettet und umgreift die Leitung mit einer konstanten Haltekraft, wodurch die Leitung festgehalten wird und eine zuverlässige Befestigungsvorrichtung für die Leitung bereitgestellt ist. Somit kann die Kunststoffschicht vorteilhaft aus einem sehr weichen Material gebildet werden. Der erfindungsgemäße Aufbau der Befestigungsvorrichtung gewährleistet, daß der Bolzen in der Kunststoffschicht aufgenommen ist, so daß der Vibrationseintrag von der Karosserie, an der die Befestigungsvorrichtung mit dem Bolzen angebracht wird, reduziert wird.

Vorzugsweise umgibt die Kunststoffschicht das Verstärkungsteil bis auf einen Befestigungsabschnitt. Scharfe Kanten des Verstärkungsteils, das z.B. aus Metall ausgebildet ist, sind von der Kunststoffschicht bedeckt, so daß das Verletzungsrisiko für einen Monteur minimiert wird. Ferner sind die vollständig von der Kunststoffschicht umgebenden Leitungen von den Vibrationen der Fahrzeugkarosserie entkoppelt, d.h. die Kunststoffschicht, die das Verstärkungsteil umgibt, wirkt als Vibrationsdämpfer.

Das Verstärkungsteil ist bevorzugt aus Metall. Metall ist auch in höheren Temperaturbereichen temperaturbeständig, so daß ein Nachlassen der Haltekräfte ausbleibt.

Alternativ ist das Verstärkungsteil aus Kunststoff, beispielsweise ein glasfaserverstärktes Polyamid. Der als Verstärkungsteil eingesetzte Kunststoff ist dabei härter und temperaturbeständiger als die Kunststoffschicht, die das Verstärkungsteil umgibt.

Das Verstärkungsteil weist insbesondere wenigstens einen im Querschnitt gesehenen C-förmigen Abschnitt auf, der die Leitung beabstandet umgibt. Eine zwischen der Leitung und dem Verstärkungsteil liegende Kunststoffschicht entkoppelt die Leitung von der Fahrzeugkarosserie, und der C-förmige Abschnitt umgreift die Leitung mit einer konstanten Haltekraft.

Gemäß einer Ausführungsform ist ein Spalt zum Einbringen der Leitung vorgesehen. Dieser ermöglicht ein einfaches Einbringen der Leitung, ohne daß z.B. ein klappenförmiges Element geöffnet und nach dem Einbringen der Leitung erneut geschlossen werden muß.

Vorzugsweise weist eine Umfangswand, die die eingebrachte Leitung umgibt, biegsame Fortsätze auf, die sich nach innen erstrecken. Die Fortsätze ermöglichen, daß Leitungen mit unterschiedlichen Leitungsdurchmessern eingebracht und sicher gehalten werden können. So sind die Fortsätze bei einer Leitung mit einem kleinen Durchmesser nicht oder unwesentlich umgebogen und berühren die Außenseite der Leitung mit ihrer Spitze, wohingegen die Fortsätze bei einem größeren Leitungsdurchmesser umgebogen sind. In beiden Fällen wird die Leitung sicher und fest umgriffen.

Vorzugsweise nimmt die Befestigungsvorrichtung mehrere Leitungen auf, was bei Bremsleitungen erforderlich ist.

Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben. In den Zeichnungen zeigen:
- Figur 1 eine perspektivische Ansicht einer erfindungsgemäßen Befestigungsvorrichtung,
- Figur 2 eine Seitenansicht der Befestigungsvorrichtung,
- Figur 3 eine Schnittansicht der Befestigungsvorrichtung entlang der Linie III-III in Figur 2,
- Figur 4 eine Seitenansicht der Befestigungsvorrichtung, und
- Figur 5 eine perspektivische Ansicht eines Verstärkungsteils der Befestigungsvorrichtung.

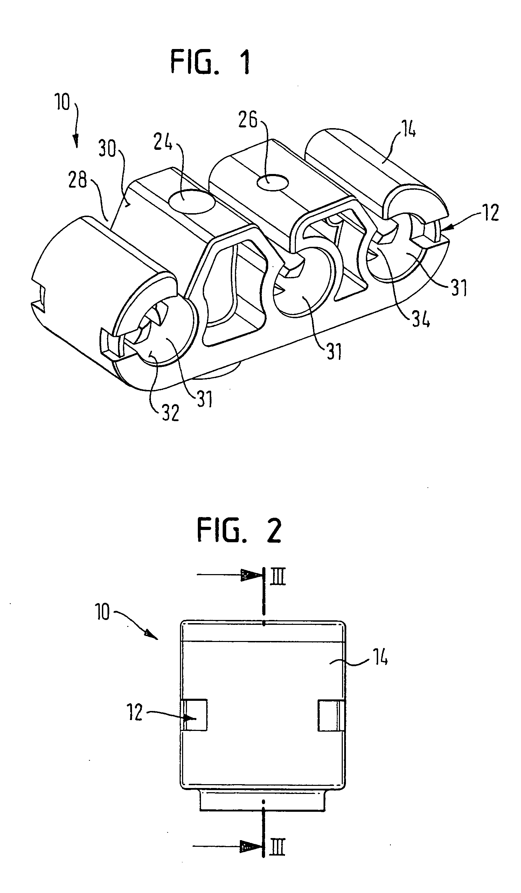

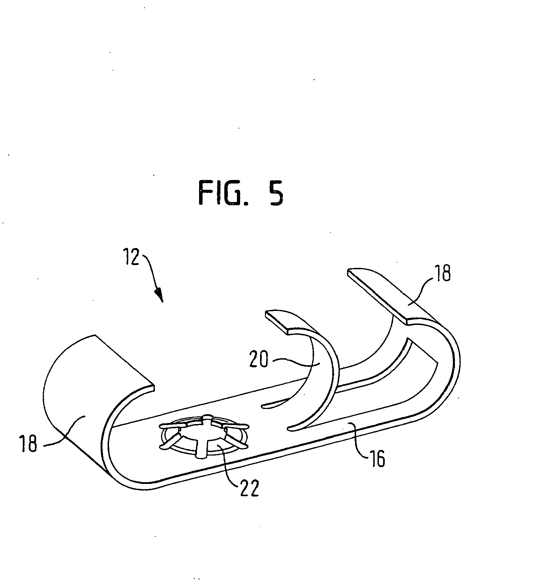

In Figur 1 ist eine Befestigungsvorrichtung 10 gezeigt, die drei Leitungen aufnehmen kann und aus einem Verstärkungsteil 12 (Figur 5) und einer Kunststoffschicht 14 besteht, die das Verstärkungsteil 12 umgibt.

Das innenliegende Verstärkungsteil 12 (Figur 5), das hier als Metallteil gezeigt ist, könnte auch aus einem glasfaserverstärkten Polyamid bestehen.

Das Verstärkungsteil 12 hat einen ebenen Abschnitt 16, der beidseitig in C-förmige Abschnitte 18 übergeht, wobei der ebene Abschnitt 16 ebenfalls einen im Querschnitt gesehen C-förmigen Abschnitt 20 aufweist, der dadurch gebildet ist, daß ein mittlerer Streifen des ebenen Abschnitts 16 ausgestanzt und nach oben gebogen ist. Deshalb ist die Breite des mittleren C-förmigen Abschnitts 20 kleiner als die der beiden äußeren C-förmigen Abschnitte 18.

Der ebene Abschnitt 16 weist ferner einen Befestigungsabschnitt 22 auf, der als Federteller ausgebildet ist und beim Anbringen der Befestigungsvorrichtung 10 an einem nicht gezeigten Bolzen angreifen kann.

Das Verstärkungsteil 12 ist in die Kunststoffschicht 14 mit Ausnahme des Befestigungsabschnitts 22 eingebettet, d.h. die Kunststoffschicht 14 umgibt das Verstärkungsteil 12 bis auf den Befestigungsabschnitt 22, genauer gesagt bis auf axiale Stirnflächen (bezogen auf die Achse der weiter unten erläuterten Öffnung 24) des Befestigungsabschnitts 22, vollständig. Die Kunststoffschicht 14 ist dabei vorzugsweise eine gespritzte TPE-V-Schicht (thermoplastisches Elastomervulkanisat).

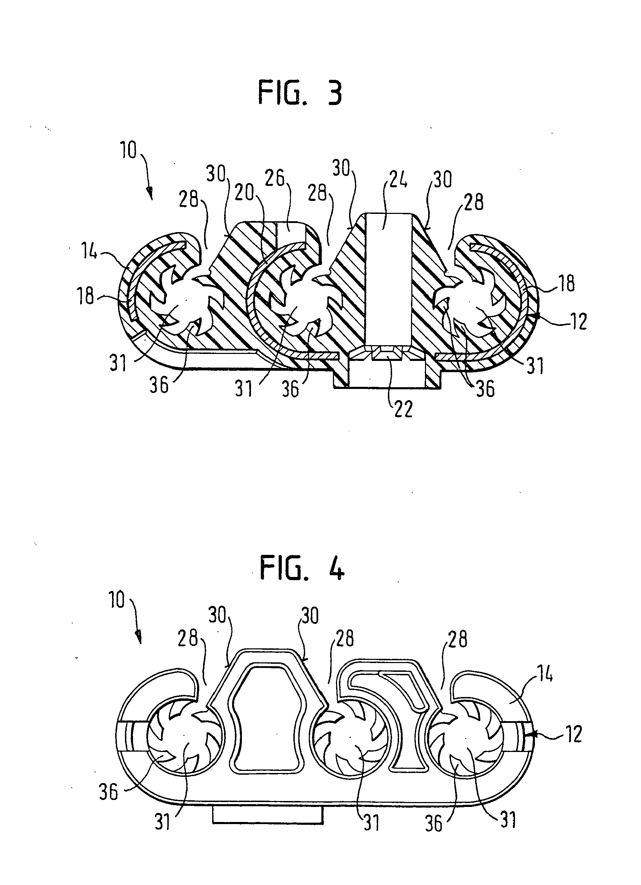

Die Unterseite (gemäß Figur 4) der Befestigungsvorrichtung 10 ist geradlinig ausgebildet, um eine ebene Auflage des Befestigungsvorrichtung 10 an der Fahrzeugkarosserie zu gewährleisten.

Die beiden äußeren C-förmigen Abschnitte 18 sind mit einer konstant dicken Kunststoffschicht 14 umgeben, so daß die Außenseiten der Befestigungsvorrichtung 10 abgerundet sind.

Die Oberseite (gemäß Figur 4) der Befestigungsvorrichtung 10 ist mit zwei zylindrischen Öffnungen 24, 26 versehen, wobei die erste Öffnung 24 sich über die gesamte Höhe der Befestigungsvorrichtung 10 erstreckt und der Aufnahme des Bolzens (nicht gezeigt) dient. Die zweite Öffnung 26 hingegen ist fertigungstechnisch notwendig, um das Verstärkungsteil 12 beim Spritzen zu halten, und erstreckt sich deshalb nur bis zum Verstärkungsteil 12.

Dadurch, daß der Bolzen in der Kunststoffschicht 14 aufgenommen ist, reduziert sich der Vibrationseintrag von der Fahrzeugkarosserie, an den die Befestigungsvorrichtung 10 mit dem Bolzen angebracht wird. Außerdem übertragen sich Vibrationen oder Pulsationen der eingebrachten Leitungen nicht so leicht auf den Bolzen. Die Anordnung und Ausgestaltung der Öffnung 24 hat darüber hinaus den Vorteil, daß der senkrecht zwischen zwei Leitungsaufnahmen angeordnete Bolzen sowohl während des Einbringens als auch im montierten Zustand der Leitungen als Abstützung für die Leitungen dient.

Die Oberseite der Befestigungsvorrichtung 10 ist zudem von drei länglichen Spalten 28 durchbrochen (Figur 1), die die gesamte Breite der Befestigungsvorrichtung 10 einnehmen und jeweils eine geneigte Wand 30 aufweisen, die ein Einbringen der Leitungen erleichtern. Die länglichen Spalte 28 gehen in eine jeweils zylinderförmige Aussparung 31 über, die von einer Umfangswand 32 umgeben ist.

Jede Umfangswand 32 ist im mittleren Bereich 34 mit Fortsätzen 36 versehen, wobei sich die jeweils sechs sichelartigen Fortsätze 36 nach innen erstrecken (Figur 3). Die biegsam ausgebildeten Fortsätze 36 können sich an unterschiedliche Leitungsdurchmesser anpassen; wenn eine Leitung mit einem großem Durchmesser eingebracht ist, sind die Fortsätze 36 umgebogen und lehnen sich an die Umfangswand 32 an, wohingegen sie bei einer Leitung mit einem kleinem Durchmesser nicht oder nur unwesentlich umgebogen sind. In beiden Fällen üben die Fortsätze 36 Haltekräfte auf die Leitungen aus, und die Leitung ist sicher und fest gehalten.

Da die Fortsätze 36 nur in einem mittleren Bereich 34 der Umfangswand 32 angeordnet sind, kann sich die eingebrachte Leitung an eine an die Befestigungsvorrichtung 10 anschließende Richtungsänderung bereits in den äußeren Bereichen anpassen. So sind größere Richtungsänderungen möglich, ohne daß die Leitung geknickt werden muß, was die Lebensdauer der Leitung verringern würde.

Die Befestigungsvorrichtung 10 kann entweder nach oder vor dem Anbringen der Leitungen an der Fahrzeugkarosserie mittels des Bolzens (nicht gezeigt), der sich durch die Öffnung 24 erstreckt, befestigt werden. Genausogut könnte die Befestigungsvorrichtung 10 mittels eines Rastfußes (nicht gezeigt) in einer Bohrung an der Fahrzeugkarosserie angebracht werden.

Bei der Montage der Befestigungsvorrichtung 10 ist das Verletzungsrisiko eines Monteurs minimiert, da scharfe Kanten des Verstärkungsteils 12 von der Kunststoffschicht 14 bedeckt sind. Ferner kann die Befestigungsvorrichtung 10 die Leitungen aufgrund des Verstärkungsteils 12 dauerhaft festhalten.

Beim Herstellen der Befestigungsvorrichtung 10 wird das Verstärkungsteil 12 mit einer automatischen Zuführung in eine Spritzform eingelegt. Das Verstärkungsteil 12 wird von der Kunststoffschicht 14 umspritzt, so daß das Verstärkungsteil 12 außer in den Bereichen, in denen es im Spritzwerkzeug gehalten wurde (Figuren 2 und 4), und am Befestigungsabschnitt 22 von dieser umgeben ist.

Wie bereits erwähnt und in den Figuren 1, 3 und 4 zu erkennen ist, umgibt die Kunststoffschicht 14 das Verstärkungsteil 12 - mit Ausnahme des Befestigungsabschnitts 22 - vollständig, d.h. insbesondere auch auf den durch die Achsen der zylinderförmigen Aussparungen 31 definierten Stirnseiten der Befestigungsvorrichtung 10 (siehe Figuren 1 und 4). Die Kunststoffschicht 14 bildet an diesen Stirnseiten eine zusammenhängende Wand, was einerseits maßgeblich zur Gesamtstabilität der Befestigungsvorrichtung 10 beiträgt und andererseits den Monteur bestmöglich vor den stirnseitigen Kanten des Verstärkungsteils 12 schützt.

## Patentansprüche

1. Befestigungsvorrichtung für eine Leitung, mit einem Verstärkungsteil (12) und einer Kunststoffschicht (14), die das Verstärkungsteil (12) wenigstens teilweise umgibt, wobei das Verstärkungsteil (12) einen Befestigungsabschnitt (22) für einen Bolzen aufweist, **dadurch gekennzeichnet, daß** in der Kunststoffschicht (14) eine zylindrische Öffnung (24) zur Aufnahme des Bolzens gebildet ist.

2. Befestigungsvorrichtung nach Anspruch 1, **dadurch gekennzeichnet, daß** sich die Öffnung (24) über die gesamte Höhe der Befestigungsvorrichtung erstreckt.

3. Befestigungsvorrichtung nach Anspruch 1 oder 2, **dadurch gekennzeichnet, daß** die Kunststoffschicht (14) das Verstärkungsteil (12) bis auf axiale Stirnflächen, bezogen auf die Achse der Öffnung (24), des Befestigungsabschnitts (22) vollständig umgibt.

4. Befestigungsvorrichtung nach einem der vorhergehenden Ansprüche, **dadurch gekennzeichnet, daß** das Verstärkungsteil (12) aus Metall ist.

5. Befestigungsvorrichtung nach einem der Ansprüche 1 bis 3, **dadurch gekennzeichnet, daß** das Verstärkungsteil (12) aus Kunststoff ist.

6. Befestigungsvorrichtung nach einem der vorhergehenden Ansprüche, **dadurch gekennzeichnet, daß** das Verstärkungsteil (12) wenigstens einen im Querschnitt gesehen C-förmigen Abschnitt (18, 20) aufweist, der die Leitung beabstandet umgibt.

7. Befestigungsvorrichtung nach einem der vorhergehenden Ansprüche, **dadurch gekennzeichnet, daß** die Kunststoffschicht (14) gespritzt ist.

8. Befestigungsvorrichtung nach einem der vorhergehenden Ansprüche, **dadurch gekennzeichnet, daß** ein Spalt (28) zum Einbringen der Leitung vorgesehen ist.

9. Befestigungsvorrichtung nach einem der vorhergehenden Ansprüche, **dadurch gekennzeichnet, daß** eine Umfangswand (32), die die eingebrachte Leitung umgibt, biegsame Fortsätze (36) aufweist, die sich nach innen erstrecken.

10. Befestigungsvorrichtung nach einem der vorhergehenden Ansprüche, **dadurch gekennzeichnet, daß** die Befestigungsvorrichtung (10) mehrere Leitungen aufnimmt.
